**Europäisches Patentamt**

**European Patent Office**

**Office européen des brevets**

(11) Numéro de publication : **0 322 301 B1**

(12) **FASCICULE DE BREVET EUROPEEN**

(45) Date de publication du fascicule du brevet :
**12.02.92 Bulletin 92/07**

(21) Numéro de dépôt : **88403245.9**

(22) Date de dépôt : **19.12.88**

(51) Int. Cl.⁵ : **B23H 9/06, B41C 1/02**

(54) **Procédé de fabrication en série d'éléments d'impression en taille-douce en acier, et appareil pour la mise en oeuvre du procédé.**

(30) Priorité : **21.12.87 FR 8717815**

(43) Date de publication de la demande :
**28.06.89 Bulletin 89/26**

(45) Mention de la délivrance du brevet :
**12.02.92 Bulletin 92/07**

(84) Etats contractants désignés :
**AT BE CH DE ES FR GB GR IT LI LU NL SE**

(56) Documents cités :
**BE-A- 837 814**
**US-A- 3 542 993**

(73) Titulaire : **BANQUE DE FRANCE**
**37-39, Quai de Dion Bouton**
**F-92803 Puteaux (FR)**

(72) Inventeur : **Puyplat, Olivier**
**66, rue d'Auteuil**
**F-75016 Paris (FR)**

(74) Mandataire : **Martin, Jean-Jacques et al**
**Cabinet REGIMBEAU 26, Avenue Kléber**
**F-75116 Paris (FR)**

Jouve, 18, rue Saint-Denis, 75001 PARIS

**Description**

La présente invention concerne le domaine de l'imprimerie, et plus particulièrement les éléments d'impression en taille-douce pour le papier fiduciaire, et notamment les billets de banque.

Il est rappelé que la taille-douce est un procédé d'impression en creux permettant de déposer sur le papier de fortes épaisseurs d'encre, la taille-douce industrielle étant déjà utilisée depuis longtemps pour le timbrage, l'impression de timbres-poste et de papiers fiduciaires. Selon cette technique, l'élément d'impression (plaque ou forme cylindrique) comporte des gravures en creux réalisées au burin et/ou par morsure, les profondeurs de ces gravures, généralement proportionnelles à leurs largeurs, variant de 0 à 300 microns, et ces gravures permettent de retenir l'encre transférée ultérieurement sur le papier.

Pour l'imprimerie du papier fiduciaire, les éléments d'impression sont actuellement réalisés par électroformage, généralement en nickel, avec un chromage final pour en protéger la surface.

L'invention concerne ainsi un procédé de fabrication en série d'éléments d'impression en taille-douce en acier, dans lequel, à partir d'une plaque d'artiste gravée en cuivre, représentant l'impression désirée, on réalise par électroformage un contretype en cuivre, selon le préambule de la revendication 1.

Selon la technique connue, l'élément de départ est alors une plaque, dite plaque d'artiste, généralement en cuivre : cette plaque est gravée par morsure et/ou au burin (souvent les deux). La plaque d'artiste gravée sert à réaliser des éléments d'impression en nickel électroformé, chromé par voie galvanoplastique.

Le processus de fabrication se déroule alors comme expliqué ci-après pour les plaques et cylindres d'impression multipose.

La plaque d'artiste est reproduite en autant d'exemplaires que nécessaire par prise de son empreinte à chaud sur un élément de matière plastique (en général du polychlorure de vinyle). A titre indicatif, on utilise souvent un polychlorure de vinyle de un millimètre d'épaisseur pour des prises d'empreintes sur une presse, sous pression entre deux plateaux chauffés à 100°C, puis refroidis sous pression jusqu'à température ambiante. La durée moyenne d'un cycle est de l'ordre de vingt minutes.

Ensuite, on procède à un assemblage des empreintes plastiques dans une salle à température contrôlée, afin d'éviter des variations dimensionnelles indésirables. Les empreintes sont assemblées entre elles par collage ou soudage haute-fréquence, avec une mise en place aussi précise que possible (quelques centièmes de millimètre), en général au moyen de dispositifs à moteurs pas à pas (trois axes de référence en x, y, z, et angle de rotation autour de l'axe z).

Selon un premier cas, on vise à fabriquer une plaque d'impression, celle-ci étant ensuite enroulée sur un cylindre porte-plaque.

Dans ce cas, l'ensemble multipose plastique est rendu conducteur par une activation au chlorure stanneux et un pistoletage de deux solutions, l'une de nitrate d'argent et d'ammoniaque, l'autre, réductrice, d'hydrazine. Il est mis ensuite dans un bain électrolytique de sulfamate de nickel à 40°C (sans chlorure pour éviter les rétreints) pour obtenir par électroformage en 48 heures sa réplique en nickel de 1,2 mm d'épaisseur. Cette plaque est rectifiée à 0,8 mm d'épaisseur, puis chromée sur 5 microns pour en durcir la surface : c'est la plaque d'impression, qui est prête à être enroulée sur un cylindre. On pourrait naturellement remplacer le dépôt d'une très mince couche d'argent par un processus de métallisation sous vide, mais ceci est plus compliqué à mettre en oeuvre, et implique des inconvénients dus aux dégagements gazeux inévitables avec la matière plastique. Il s'agit donc d'une technique de type galvanoplastique.

Selon un deuxième cas, on vise à fabriquer une virole d'impression, celle-ci étant ensuite emmanchée sur un axe d'acier pour constituer un cylindre d'impression.

Dans ce cas, pour obtenir une virole de nickel multipose, l'ensemble multipose plastique précédent, rendu conducteur comme décrit ci-dessus, est inséré dans un cylindre creux constitué par deux demi-coquilles de bronze. L'ensemble est placé dans le bain électrolytique de sulfamate de nickel pendant trois semaines pour obtenir un électroformage de 12 mm d'épaisseur. Toujours placée dans son moule de bronze, l'intérieur de la virole de nickel est alors usinée au tour pour la réalisation d'une épaisseur constante. Elle est ensuite démoulée et chromée sur 5 microns pour en durcir la surface : c'est la virole d'impression, qui est prête à être emmanchée sur un axe.

Il est signalé pour mémoire un troisième cas, selon lequel on vise à fabriquer un cylindre d'impression plein, comme c'est le cas pour l'impression de timbres-poste : on utilise alors une machine à moleter pour obtenir le cylindre d'impression qui porte les cent ou quatre cents images semblables en creux. Il s'agit d'un procédé de report par pression qui serait inenvisageable pour l'impression de papier fiduciaire en raison des profondeurs de gravure et des surfaces concernées.

Pour bien comprendre les inconvénients que présentent les éléments d'impression (plaque ou virole) en nickel obtenus par électroformage, il convient de rappeler brièvement les principes généraux de l'impression en taille-douce, telle qu'elle est traditionnellement utilisée pour le papier fiduciaire.

La plaque (ou la virole) est montée sur le cylindre imprimant de la machine d'impression. Le cylindre est encré sur toute sa surface par un rouleau d'encrage, suivant une technique classique en imprimerie. Immédiatement après l'encrage, une lame fixe ou un cylindre à contre-rotation, celui-ci étant équipé d'une racle ou une bande elle-même raclée, vient enlever l'encre de la plaque (ou de la virole), n'en laissant que dans les gravures puisque celles-ci sont en creux. Immédiatement après ce raclage, un essuyage de la plaque ou de la virole est effectué, soit par une bande papier, soit par une aspersion ou un brossage à eau sodée à environ 2 % de soude additionnée d'un agent mouillant, cet essuyage ayant pour fonction d'enlever toute trace d'encre sur la surface extérieure de la plaque ou de la virole. Ensuite le papier est pressé sur l'élément d'impression par un cylindre dit de pression, typiquement constitué de plaques de tissu de coton serrées à haute pression et chargées de résine généralement polyuréthane, dont la surface extérieure est rectifiée au tour. Il est important de noter que la pression peut atteindre une tonne par cm linéaire. Le papier est ainsi déformé à l'endroit des gravures où il va chercher l'encre : l'impression obtenue est une impression en relief, d'une part à cause de l'embossage du papier, et d'autre part à cause de l'épaisseur de l'encre démoulée de la gravure.

Le premier inconvénient des éléments d'impression traditionnels réside dans leur usure rapide.

Les facteurs qui participent à l'usure des éléments d'impression sont le raclage de l'encre, l'essuyage papier, les niveaux de pression atteints. Malgré la présence de chrome, l'usure des éléments d'impression intervient dans les délais peu satisfaisants avec l'importance des tirages que représentent l'impression des billets de banque. Typiquement, les plaques sont changées tous les 750 000 impressions et les viroles démontées pour déchromage, rechromage tous les millions d'impressions.

Un autre inconvénient réside dans la nécessité de réaliser un chromage des surfaces imprimantes en vue d'obtenir le durcissement requis : ce chromage exige des opérations délicates et longues, avec démontage répété des cylindres.

Un autre inconvénient réside dans la difficulté d'obtenir le degré de polissage requis en préparant la surface recevant l'encre.

Ainsi, les techniques connues servant à fabriquer les éléments d'impression en taille-douce mettent en oeuvre des métaux mous qui s'usent assez rapidement, et exigent des processus délicats et coûteux.

Il serait évidemment tentant de pouvoir réaliser des éléments d'impression inusables, en un matériau dur, comme l'acier par exemple, ne nécessitant pas d'entretien particulier.

Cependant, la réalisation des gravures de façon répétitive (multipose) et conforme à la plaque d'artiste implique un mode d'usinage particulier, la gravure par outil coupant manoeuvré à la main étant inenvisageable eu égard à la fidélité des reproductions successives. La gravure par outil coupant manoeuvré mécaniquement n'a pu conduire jusqu'à présent à une installation à l'échelle industrielle, les précisions dimensionnelles demandées étant difficiles à atteindre dans un rapport coût/efficacité compatible avec une exploitation industrielle réaliste.

La présente invention a pour objet de proposer un procédé rationnel et satisfaisant de fabrication en série d'éléments d'impression en taille-douce, en utilisant une technique d'usinage par étincelage ou électro-érosion, permettant d'obtenir des éléments d'impression en acier, ainsi qu'une machine d'usinage par électro-érosion spécialement prévue pour la mise en oeuvre dudit procédé.

L'usinage par électro-érosion est en effet une technique de reproduction utilisée couramment dans le domaine de l'automobile, de l'aviation et du nucléaire, car elle permet d'usiner, avec de très grandes précisions, des matériaux réfractaires à tout usinage classique (comme par exemple, du carbure de tungstène). Ce type particulier d'usinage, n'utilisant aucun outil coupant, se fait sans contact : l'arrachage du métal est réalisé par une succession d'étincelles qui s'établissent entre la pièce à usiner et la réplique de la forme à obtenir, réplique conductrice appelée électrode pour la circonstance. L'usinage se passe dans des machines dont les cycles opératoires sont très automatisés, et qui sont généralement programmables.

Un ensemble typique d'usinage par électro-érosion comporte un générateur de décharges intermittentes (les décharges électriques étant contrôlées en durée et en intensité de courant) et un bâti support d'une électrode (en général en graphite, en laiton ou en cuivre) et d'une pièce à usiner en acier trempé. La pièce à usiner est alors fixée dans un bac contenant un liquide diélectrique (en général du kérosène) et ayant pour fonction d'assurer le passage du courant et l'extraction du métal érodé nettoyant ainsi l'intervalle entre électrode et pièce à usiner. Pour que le travail soit automatique, la descente de l'électrode dans la pièce doit être servocommandée, de telle sorte que la distance entre électrode et pièce à usiner soit maintenue à la valeur de l'épaisseur de diélectrique qui peut être rompue par les décharges ; à cet effet, la descente de l'électrode est asservie à la différence de potentiel entre l'électrode et la pièce à usiner.

Il est bien connu dans cette technique que le débit de matière enlevée dépend de nombreux facteurs, le premier étant le régime d'étincelage fourni par le générateur ; l'obtention d'un débit le plus élevé possible en utilisant des étincelles puissantes à grandes fréquences de récurrence est cependant limitée par l'état de surface recherché et la précision d'usinage.

Dans la pratique, pour obtenir à la fois un état de surface très fin et une précision d'usinage importante, avec des délais d'usinage réduits, on est conduit à utiliser plusieurs régimes d'étincelage : ébauche, finition, super finition, polissage.

Pièce et électrode subissent toutes deux l'érosion due à l'étincelage. Mais la différence de matière érodée sur la pièce et l'électrode dépend de la nature de chacune d'elles et aussi du choix des conditions électriques pour la création des étincelles. En choisissant les matériaux d'électrode appropriés et en influençant la décharge par variation de sa durée, de son intensité et de la polarité, on peut arriver à une dissymétrie très importante : par exemple obtenir 99 % d'érosion sur la pièce et 0,5 % sur l'électrode. Cependant, dans les régimes de finition et super finition, il est difficile de ne pas avoir une usure sensible de l'électrode (de l'ordre de 10 %). Cette usure de l'électrode contraint, dans les opérations où on recherche une excellente qualité d'usinage, à procéder au remplacement des électrodes au fur et à mesure qu'on avance dans l'érosion vers le stade de super finition. Pour graver de l'acier, les électrodes sont en général en graphite (surtout si l'on cherche de forts débits d'érosion) mais aussi très souvent en cuivre ou en laiton.

Les performances d'usinage obtenues par électro-érosion sont très bonnes. La précision est facilement descendue au niveau du micron. Quant à l'état de surface il dépend bien sûr beaucoup du régime d'étincelage : la rugosité absolue en microns est de l'ordre de 10 à 20 pour l'ébauche, 3 à 5 pour la finition, 0,5 en super finition et 0,1 micron en polissage.

Pour illustrer l'état de la technique, on peut citer les documents US-A-3 542 993 et BE-A-837 814.

Le document US-A-3 542 993 décrit une technique de fabrication de poinçons cylindriques par électro-érosion.

La machine connue comporte un banc automatisé d'usinage par électro-érosion, avec un support d'électrode monté fixe dans un bac contenant un liquide diélectrique, ledit bac étant mobile dans un plan horizontal, et avec un dispositif rotatif supportant la pièce d'acier à usiner, et un dispositif mobile supportant l'électrode, selon le préambule de la revendication 12.

Le domaine considéré est cependant celui du découpage, de l'embossage, de l'emboutissage, du moletage, ou du dentelage de pièces, et non pas celui de l'impression. Ceci est important, car le degré de précision n'a rien à voir : pour les poinçons, la précision recherchée peut tout au plus atteindre cinq centièmes de millimètre, alors que pour les éléments d'impression, et a fortiori l'impression en taille-douce, la reproductibilité recherchée exige une précision de cinq millièmes de millimètre, donc dix fois plus grande.

Or, les moyens mécaniques d'entraînement que comporte la machine connue pour fabriquer des poinçons cylindriques ne sauraient convenir pour réaliser des éléments d'impression (voir en particulier l'entraînement par pignon et crémaillère représenté à la figure 15 du document américain précité).

Il convient subsidiairement de noter que la machine du brevet américain visait avant tout à réduire les temps et les coûts de fabrication des poinçons, alors que l'invention vise à rechercher une inusabilité des éléments d'impression, même si la mise en oeuvre est longue.

Le document BE-A-837 814 décrit quant à lui une technique du domaine tampographique, selon laquelle la gravure d'un ensemble graphique sur une pièce en métal dur est réalisée par électro-érosion, avec une électrode comprenant un élément conducteur sur lequel l'ensemble graphique a été reproduit par photogravure.

Cependant, le domaine considéré est là encore très différent, et les exigences en matière de précision n'ont rien à voir avec celles que l'on requiert pour l'impression en taille-douce. Pour la tampographie, on recherche une gravure en relief permettant un marquage convenable, mais la précision est au mieux de l'ordre du demi-millimètre.

Ainsi, les deux documents précités sont cités au titre d'arrière-plan technologique de l'invention, pour illustrer des techniques de fabrication par électro-érosion dans des domaines n'ayant rien à voir avec celui de l'impression en taille-douce, et pour lesquels le degré de précision requis reste modeste par rapport à la grande finesse exigée pour les éléments d'impression en taille-douce.

D'ailleurs, le rappel des techniques connues en matière d'impression en taille-douce pour le papier fiduciaire, figurant au début de la description de la présente demande, illustre bien la complexité de la fabrication des éléments d'impression en taille-douce, complexité qui ne se retrouve naturellement pas dans le domaine de la fabrication de poinçons de découpage ou d'emboutissage, ni dans le domaine de la tampographie.

L'invention a essentiellement pour objet de rendre possible une fabrication en série d'éléments d'impression en acier, cette fabrication pouvant être automatisée, non seulement pour une uniformisation de la qualité des éléments réalisés, mais pour s'affranchir le plus possible du délai et des aléas de leur obtention.

Il s'agit plus particulièrement d'un procédé du type précité, caractérisé en ce qu'il comporte les étapes successives suivantes :

a) on usine la face du contretype en cuivre opposée à la gravure, de façon à définir un plan de référence ;

b) on utilise le contretype en cuivre comme électrode dans un banc d'usinage par électro-érosion où est disposée la pièce d'acier à usiner présentant une face latérale cylindrique dont l'axe est parallèle au plan de référence, l'usinage se faisant pas à pas par zones successives grâce à des déplacements relatifs entre ladite pièce à usiner et ladite électrode au cours desquels ledit axe reste parallèle audit plan de référence, jusqu'à obtention du ou des éléments d'impression en taille-douce présentant l'état de surface recherché,

conformément à la partie caractérisante de la revendication 1.

De préférence, la plaque d'artiste est préalablement planée et usinée en sa face arrière, de façon que le plan de référence soit parallèle à ladite face et donc à la face de travail sur laquelle a travaillé l'artiste.

Il est également avantageux de prévoir que la plaque d'artiste utilisée présente une gravure légèrement plus grasse par rapport à l'impression désirée, de façon à pouvoir préserver l'accès latéral pour la circulation de fluide entre l'électrode et la pièce à graver, et de ce fait éviter le brossage de l'électrode à l'usinage de chaque zone successive de la pièce d'acier à usiner ; en particulier, la gravure de la plaque d'artiste est exagérée jusqu'à obtention de creux plus profonds de quelques dixièmes de millimètre, de préférence un à deux dixièmes.

De préférence, la face latérale cylindrique de la pièce d'acier à usiner est préalablement rectifiée et polie.

Selon une autre caractéristique avantageuse du procédé, on maintient au cours de l'étape d'usinage par électro-érosion, un intervalle déterminé entre l'électrode et la face latérale cylindrique de la pièce d'acier à usiner, ledit intervalle étant réduit jusqu'à un intervalle de l'ordre de un à deux dixièmes de millimètre.

De préférence, la pièce d'acier à usiner peut tourner d'un pas angulaire pour l'usinage de chaque zone successive de ladite pièce, l'électrode étant déplacée en correspondance, parallèlement au plan de référence et perpendiculairement à l'axe de la pièce à usiner, d'un pas égal à la longueur d'arc de la face latérale de ladite pièce à usiner correspondant audit pas angulaire. En particulier, le pas de déplacement de l'électrode est de l'ordre de quelques dixièmes de millimètre, de préférence environ cinq dixièmes ; de préférence aussi, lors de l'usinage de chaque zone successive de la pièce d'acier à usiner, l'électrode est seule déplacée, selon une direction perpendiculaire au plan de référence.

Le procédé de l'invention peut enfin présenter deux variantes selon le type d'élément d'impression recherché : il peut s'agir d'un procédé dans lequel la pièce d'acier à usiner est une plaque ou une virole cylindrique, la pièce à usiner étant montée pour l'étape d'usinage par électro-érosion sur une armature cylindrique dont l'axe constitue l'axe de la face latérale de ladite pièce, ou encore d'un procédé dans lequel la pièce d'acier à usiner est un cylindre plein, de façon à obtenir directement, après usinage par électro-érosion, un cylindre d'impression en taille-douce.

L'invention concerne également une machine d'usinage par électro-érosion pour la mise en oeuvre du procédé selon l'étape b) précitée dudit procédé, pour fabriquer des éléments d'impression en taille-douce en acier.

Il s'agit plus particulièrement d'une machine du type précité, caractérisée par le fait que le dispositif rotatif et le dispositif mobile autorisent des déplacements relatifs entre pièce à usiner et électrode tels que l'axe de la face latérale de ladite pièce reste parallèle au plan de référence de ladite électrode, que le dispositif rotatif est réglable suivant un axe vertical et en rotation autour de cet axe au moyen de deux moteurs pas à pas programmables, et que le dispositif mobile comporte un plateau mobile dans un plan horizontal selon deux axes de référence au moyen de deux moteurs pas à pas programmables, et un support d'électrode monté sur ledit plateau de telle façon que le plan de référence de l'électrode soit perpendiculaire au plan défini par les axes de référence et parallèle à l'un desdits axes, conformément à la partie caractérisante de la revendication 12.

D'autres caractéristiques et avantages de l'invention apparaîtront plus clairement à la lumière de la description qui va suivre et des dessins annexés, concernant un mode de réalisation particulier, en référence aux figures où :

– la figure 1 illustre schématiquement les différentes étapes d'un procédé de fabrication conforme à l'invention,

– la figure 2 est une vue en perspective illustrant un appareil pour la mise en oeuvre du procédé, et en particulier le banc d'usinage par électroérosion utilisé, dont le bac contenant un liquide diélectrique est partiellement symbolisé en traits mixtes pour ne pas charger la représentation,

– les figures 3a et 3b illustrent schématiquement deux phases successives d'usinage, faisant ressortir le décalage d'un pas angulaire de la pièce à usiner, et le décalage correspondant de l'électrode parallèlement au plan de référence, la figure 3a représentant par exemple les positions respectives d'origine.

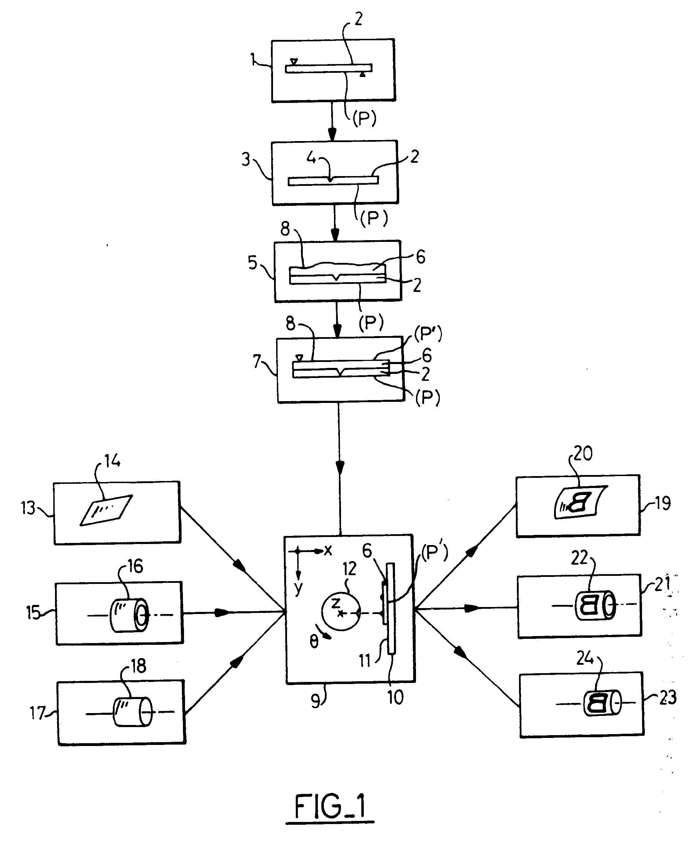

La figure 1 illustre schématiquement les différentes étapes du procédé de fabrication en série d'éléments d'impression en taille-douce conforme à l'invention. Les étapes sont représentées par des blocs à l'intérieur desquels est illustré schématiquement le produit concerné.

Le bloc 1 schématise la préparation préalable d'une plaque d'artiste 2 en cuivre, avant de procéder à la gravure de celle-ci. La plaque d'artiste 2 est en effet planée, et sa face arrière (opposée à la face spéculaire sur laquelle travaillera l'artiste) est usinée et rectifiée pour être parallèle à la face de travail : on définit ainsi selon la face arrière un plan de référence noté (P).

Le bloc 3 schématise la gravure de la plaque d'artiste 2 ; la plaque d'artiste est gravée partie par morsure (eau forte), partie au burin (taille-douce), cette gravure étant ici schématisée par un creux 4.

Le procédé de l'invention permet de fabriquer en série des éléments d'impression en taille-douce en acier à partir de cette plaque d'artiste gravée en cuivre représentant l'impression désirée. C'est ainsi que le bloc 5 indique que l'on réalise, à partir de la plaque d'artiste gravée 2, un contretype en cuivre, à l'aide d'un processus d'électroformage. Ce contretype en cuivre est obtenu par une technique classique du domaine de la galvanoplastie, de sorte qu'il est inutile de décrire plus en détail cette phase du procédé. A la sortie du bain d'électroformage en cuivre, la face de croissance galvanique du sandwich plaque d'artiste - contretype, face repérée par la référence 8, est relativement irrégulière.

Le bloc 7 indique qu'après gravure et à la sortie du bain d'électroformage, le sandwich plaque d'artiste 2 - contretype 6 est rectifié sur la face de croissance galvanique 8 du sandwich, afin que cette face se retrouve parallèle au dos de la plaque d'artiste correspondant au plan de référence (P) : la face rectifiée est ainsi référencée (P'), cette face constituant un nouveau plan de référence pour l'étape ultérieure d'usinage par électroérosion, étant entendu que ce nouveau plan de référence (P'), parallèle à la face (P), est donc aussi parallèle à la face de travail sur laquelle a travaillé l'artiste.

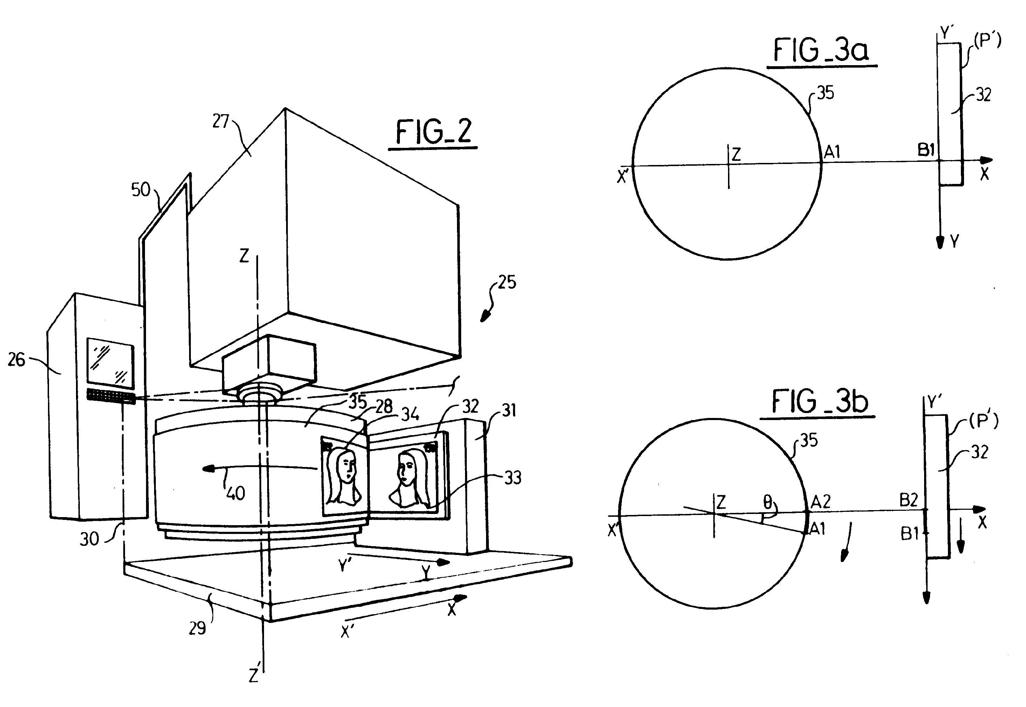

Conformément à un aspect essentiel du procédé de l'invention, on utilise le contretype en cuivre 6 comme électrode dans un banc d'usinage par électro-érosion où est disposée la pièce d'acier à usiner, comme cela est schématisé par le bloc 9. On a représenté dans ce bloc un support d'électrode 10 contre la face 11 duquel est disposé le contretype en cuivre 6 formant électrode, dont la face arrière (P') est appliquée contre ladite face 11. On distingue également la face latérale cylindrique 12 de la pièce d'acier à usiner, l'axe de cette face latérale cylindrique étant parallèle au plan de référence (P'), et perpendiculaire au plan de la figure. L'usinage par électro-érosion s'effectue pas à pas par zones successives, grâce à des déplacements relatifs entre la pièce à usiner et l'électrode, au cours desquels l'axe de la face latérale cylindrique reste parallèle au plan de référence (P'), jusqu'à obtention du ou des éléments d'impression en taille-douce présentant l'état de surface recherché. On a indiqué schématiquement les axes de référence x, y, z, ainsi que l'angle θ de rotation de la pièce d'acier à usiner autour de l'axe vertical z. Les mouvements relatifs entre la pièce à usiner et l'électrode seront mieux compris en se référant à la description donnée ci-après en référence aux figures 2, 3a et 3b. En effet, la pièce d'acier à usiner est montée pour pouvoir tourner d'un pas angulaire θ pour l'usinage de chaque zone successive de ladite pièce, l'électrode 6 étant déplacée en correspondance, parallèlement au plan de référence (P') et perpendiculairement à l'axe de la pièce à usiner, d'un pas égal à la longueur d'arc concernée de la face latérale 12 de ladite pièce à usiner correspondant audit pas angulaire.

Les blocs 13, 15, 17 rappellent schématiquement que l'on peut utiliser différents types de pièces d'acier à usiner selon l'élément d'impression en taille-douce recherché. On distingue ainsi une plaque 14, une virole cylindrique 16, ou un cylindre plein 18. Dans le cas d'une plaque ou d'une virole cylindrique, la pièce à usiner est montée pour l'étape d'usinage par électro-érosion sur une armature cylindrique classique dont l'axe constitue l'axe de la face latérale 12 de ladite pièce. Lorsque la pièce à usiner est un cylindre plein 18, on obtient directement, après usinage par électro-érosion, un cylindre d'impression en taille-douce. Les éléments d'impression en taille-douce en acier obtenus après usinage par électro-érosion sont indiqués dans les blocs 19, 21 et 23, et les éléments d'impression correspondants plaque 20, virole cylindrique 22, et cylindre plein 24, sont représentés avec la lettre B à l'envers pour rappeler qu'il s'agit d'une impression en négatif. Il va de soi que les plaques d'impression 20 ou viroles cylindriques 22 obtenues sont montées ultérieurement en se conformant aux techniques classiques pour constituer un cylindre d'impression.

Compte tenu de la précision élevée requise pour ce type d'impression, tous les éléments en présence doivent être préparés le mieux possible à cet effet. C'est ainsi que la face latérale cylindrique de la pièce d'acier à usiner, que celle-ci soit une plaque, une virole cylindrique, ou un cylindre plein, sera de préférence préalablement rectifiée et polie. Par ailleurs, de petites imperfections peuvent résulter de la phase d'obtention du contretype en cuivre lors du processus d'électroformage. En effet, de très petits copeaux peuvent subsister dans les creux de l'électrode après électroformage, ces copeaux qui ont tendance à adhérer à la surface pouvant générer des court-circuits défavorables lors de l'étape d'usinage par électro-érosion. Ceci rend nécessaire de maintenir un intervalle non nul entre l'électrode et la face latérale cylindrique de la pièce d'acier à usiner, ledit intervalle étant de préférence de l'ordre de un à deux dixièmes de millimètre. Par ailleurs, compte tenu des faibles profondeurs de gravure et de la répartition sur une plaque, il est normalement nécessaire d'effectuer un brossage de l'électrode à chaque passe successive d'usinage par électro-érosion. A cet effet, dans le cadre de l'invention, un mode de réalisation particulier permet d'éviter ces opérations répétées de brossage de l'électrode : pour cela, la plaque d'artiste 2 utilisée présente une gravure 4 légèrement plus grasse par rapport à l'impression désirée : la gravure est par exemple exagérée jusqu'à obtention de creux plus profonds de quelques dixièmes de millimètre, de préférence un à deux dixièmes. On parvient ainsi à obtenir des résultats excellents, car on est assuré en préservant ainsi l'accès latéral que le fluide peut circuler correctement entre l'électrode et la pièce à graver. L'usinage de chaque zone successive de la pièce d'acier se fait alors selon un pas de déplacement de l'électrode de l'ordre de quelques dixièmes de millimètre, de préférence environ cinq dixièmes, ladite pièce d'acier à usiner tournant quant à elle d'un pas angulaire de quelques dixièmes de degré. Lors de l'usinage proprement dit de chaque zone successive de la pièce d'acier à usiner, l'électrode est de préférence seule déplacée, selon une direction perpendiculaire au plan de référence (P′).

Le procédé de l'invention permet ainsi de développer une technique de gravure fidèle, précise et automatisable, susceptible d'être utilisée pour la gravure des nuances d'acier les plus dures grâce à l'utilisation de l'électro-érosion. La figure 2 va permettre de mieux comprendre comment se déroule cette étape fondamentale d'usinage par électro-érosion au cours de laquelle on utilise comme électrode un contretype en cuivre de la plaque d'artiste gravée. La machine illustrée 25 comporte une unité centrale 26 à commande programmable, unité de commande qui permet de contrôler les différents paramètres de fonctionnement, et de gérer automatiquement la fabrication en série des éléments d'impression en taille-douce.

Fondamentalement, le banc automatisé d'usinage par électro-érosion comporte un dispositif rotatif programmable 27 supportant la pièce d'acier à usiner, et un dispositif mobile programmable supportant l'électrode 32, lesdits dispositifs autorisant des déplacements relatifs entre pièce à usiner et électrode tels que l'axe de la face latérale de ladite pièce reste parallèle au plan de référence (P′) de ladite électrode. La pièce en acier à graver est soit une plaque, soit une virole cylindrique, soit un cylindre plein : lorsqu'il s'agit d'une plaque ou d'une virole cylindrique, la pièce en acier est montée par des moyens connus sur une armature cylindrique pour reconstituer un cylindre susceptible d'être fixé sur le dispositif rotatif programmable de la machine d'usinage. Lorsqu'il s'agit d'un cylindre plein, il suffit d'adapter le mode de liaison au dispositif rotatif pour que la pièce puisse tourner avec précision autour de son axe. Sur la figure 2, on a représenté une armature cylindrique 28 sur laquelle est montée une plaque dont la surface latérale cylindrique est repérée par la référence 35. La pièce d'acier est rectifiée et polie (polie spéculaire), et le montage est tel que pour un diamètre de l'ordre de 150 mm, le faux rond n'excède pas ± deux centièmes de millimètre. Ce montage est fixé sur le dispositif de la machine d'usinage c'est-à-dire le dispositif 27 qui autorise un réglage suivant l'axe vertical z′-z, et une rotation autour de cet axe (repérée par la flèche 40), au moyen de deux moteurs pas à pas programmables non représentés ici. Il est par ailleurs prévu un dispositif mobile programmable supportant l'électrode 32, ce dispositif comportant ici un plateau 29 mobile dans un plan horizontal selon deux axes de référence x′-x, y′-y au moyen de deux moteurs pas à pas programmables (non représentés ici), et un support d'électrode 31 monté sur ledit plateau de telle façon que le plan de référence (P′) de l'électrode soit perpendiculaire au plan défini par les axes de référence x′-x, y′-y et parallèle à l'un (y′-y) desdits axes. Dans la pratique, le support d'électrode 31 est monté fixe dans un bac 30 contenant un liquide diélectrique, ledit bac étant mobile dans un plan horizontal : dans ce cas, le plateau de support 29 n'est autre que le fond du bac. On a représenté sur la figure 2 une impression 33 (positif en relief) apparaissant sur la face extérieure de l'électrode 32, ce qui permet d'obtenir, grâce à un usinage se faisant pas à pas par zones successives, l'impression désirée 34 (négatif en creux) sur la face cylindrique 35 de la pièce à usiner.

A titre indicatif, pour une plaque de 80 x 160 mm, une épaisseur de 4 mm est convenable pour assurer sa rigidité et son positionnement précis dans l'installation d'électro-érosion. Il est important de rappeler que l'électrode est rectifiée sur la partie opposée à la gravure en référence avec le plan de gravure de l'artiste, le plan de référence de la gravure étant ainsi toujours préservé dans le cadre du procédé de l'invention. On se sert naturellement de ce plan de référence (P′) pour fixer l'électrode sur le plateau 29, le plan de référence (P′) étant parallèle à l'axe z′-z autour duquel tourne la pièce d'acier à usiner.

Les figures 3a et 3b permettent de comprendre comment se déroulent les phases successives d'usinage par électro-érosion, en faisant ressortir le décalage d'un pas angulaire de la pièce à usiner et le décalage correspondant de l'électrode parallèlement au plan de référence.

Sur la figure 3a, l'électrode 32 est positionnée par rapport à la surface 35 de la pièce d'acier à usiner de telle façon que les origines de la gravure (en relief) de l'électrode (point B1) soient en face des origines de la gravure (en creux) à obtenir sur la pièce en acier (point A1). Il est rappelé que l'électrode 32 peut se déplacer selon l'axe y′-y parallèlement au plan de référence (P′), ou selon l'axe x′-x en se dirigeant vers la pièce d'acier à usiner ; cette dernière est seulement repérée par son paramètre angulaire θ, étant donné que le paramètre z est fixé une fois pour toutes, après réglage, avant de procéder à l'usinage par électro-érosion. La distance A1-B1 correspond à l'intervalle entre l'électrode et la face latérale cylindrique de la pièce d'acier à usiner, et cet intervalle est réduit jusqu'à un intervalle de travail très faible, mais non nul, au cours de l'étape d'usinage par électro-érosion : ce faible intervalle est de préférence de l'ordre de un à deux dixièmes de millimètre. Lorsque cette première séquence d'usinage est effectuée, l'électrode est éloignée du cylindre, et chaque élément se déplace d'un pas : la pièce à usiner tourne d'un angle θ autour de l'axe z, et l'électrode 32 est déplacée parallèlement à l'axe y'-y d'une quantité B1-B2 égale à la longueur de l'arc A1-A2 du cylindre. A titre indicatif, on choisira un pas de déplacement d'environ cinq dixièmes de millimètre pour l'électrode (segment B1-B2), ce qui correspondra, pour un cylindre de 150 mm de diamètre, à un pas angulaire d'environ quatre dixièmes de degré pour la pièce d'acier à usiner (angle θ). On parvient ainsi à la position illustrée en figure 3b. Une fois ces deux mouvements effectués, l'électrode 32 est alors à nouveau déplacée selon l'axe x'-x pour se rapprocher de la surface latérale cylindrique 35 de la pièce à usiner, de sorte que l'usinage par électro-érosion est repris dans la zone de la génératrice A2 du cylindre. Le processus est alors réitéré jusqu'à obtention de la totalité de l'impression désirée. A titre indicatif, il faudra compter environ dix heures pour le déroulement complet de la phase d'usinage par électro-érosion pour une électrode de 80 x 160 mm. La durée de cette phase est cependant relativement courte par rapport à la durée d'obtention du contretype en cuivre par électroformage : pour obtenir un contretype d'environ 5 à 6 mm d'épaisseur, il faut en général compter de quatre à cinq jours, cette surépaisseur étant nécessaire pour obtenir une électrode de 4 mm d'épaisseur après usinage et rectification pour que sa face arrière soit parallèle à la face de travail.

Le procédé et l'appareil de l'invention permettent d'obtenir des résultats extrêmement performants, et ce de façon entièrement automatisée, car il est aisé d'obtenir des éléments d'impression en taille-douce présentant une rugosité absolue inférieure à 0,5 micron.

Grâce à cette technique de fabrication, on peut obtenir des éléments d'impression en acier présentant des avantages très importants :

– l'usure due au raclage et à l'essuyage peut être contrôlée par les nuances d'acier utilisées ;

– la préparation de la surface recevant l'encre peut être poussée sans difficulté au degré de polissage requis ;

– le chromage des surfaces imprimantes n'est plus nécessaire.

On parvient ainsi à disposer d'éléments d'impression inusables et ne nécessitant pas d'entretien particulier, alors que la gravure par outil coupant manoeuvré mécaniquement n'avait pas encore pu conduire jusqu'à présent à une installation industrielle.

**Revendications**

1. Procédé de fabrication en série d'éléments d'impression en taille-douce en acier, dans lequel, à partir d'une plaque d'artiste (2) gravée en cuivre, représentant l'impression désirée, on réalise par électroformage un contretype en cuivre (6, 32), caractérisé par le fait qu'il comporte les étapes successives suivantes :

a) on usine la face (8) du contretype en cuivre (6) opposée à la gravure, de façon à définir un plan de référence (P') ;

b) on utilise le contretype en cuivre (6, 32) comme électrode dans un banc d'usinage par électro-érosion où est disposée la pièce d'acier à usiner (14, 16, 18) présentant une face latérale cylindrique (12, 35) dont l'axe est parallèle au plan de référence (P'), l'usinage se faisant pas à pas par zones successives grâce à des déplacements relatifs entre ladite pièce à usiner (35) et ladite électrode (32) au cours desquels ledit axe reste parallèle audit plan de référence (P'), jusqu'à obtention du ou des éléments d'impression en taille-douce (20, 22, 24) présentant l'état de surface recherché.

2. Procédé selon la revendication 1, caractérisé par le fait que la plaque d'artiste (2) est préalablement planée et usinée en sa face arrière (P), de façon que le plan de référence (P') soit parallèle à ladite face (P) et donc à la face de travail sur laquelle a travaillé l'artiste.

3. Procédé selon l'une des revendications 1 et 2, caractérisé par le fait que la plaque d'artiste (2) utilisée présente une gravure (4) légèrement plus grasse par rapport à l'impression désirée, de façon à pouvoir éviter le brossage de l'électrode (6) à l'usinage de chaque zone successive de la pièce d'acier à usiner.

4. Procédé selon la revendication 3, caractérisé par le fait que la gravure (4) de la plaque d'artiste (2) est exagérée jusqu'à obtention de creux plus profonds de quelques dixièmes de millimètre, de préférence un à deux dixièmes.

5. Procédé selon l'une des revendications 1 à 4, caractérisé par le fait que la face latérale cylindrique (12, 35) de la pièce d'acier à usiner est préalablement rectifiée et polie.

6. Procédé selon l'une des revendications 1 à 5, caractérisé par le fait qu'au cours de l'étape d'usinage par électro-érosion, on maintient un intervalle déterminé (A1-B1) entre l'électrode (6, 32) et la face latérale cylindrique (12, 35) de la pièce d'acier à usiner, ledit intervalle étant réduit jusqu'à un intervalle de l'ordre de un à deux dixièmes de millimètre.

7. Procédé selon l'une des revendications 1 à 6, caractérisé par le fait que la pièce d'acier à usiner peut tourner d'un pas angulaire (θ) pour l'usinage de chaque zone successive de ladite pièce, l'électrode (32) étant déplacée en correspondance, parallèlement au plan de référence (P') et perpendiculairement à l'axe de la pièce à usiner, d'un pas égal à la longueur d'arc de la face latérale (35) de ladite pièce à usiner correspondant audit pas angulaire.

8. Procédé selon la revendication 7, caractérisé par le fait que le pas de déplacement de l'électrode (32) est de l'ordre de quelques dixièmes de millimètre, de préférence environ cinq dixièmes.

9. Procédé selon la revendication 7, caractérisé par le fait que lors de l'usinage de chaque zone successive de la pièce d'acier à usiner, l'électrode (32) est seule déplacée, selon une direction perpendiculaire au plan de référence (P').

10. Procédé selon l'une des revendications 1 à 9, dans lequel la pièce d'acier à usiner est une plaque (14) ou une virole cylindrique (16), la pièce à usiner étant montée pour l'étape d'usinage par électro-érosion sur une armature cylindrique dont l'axe constitue l'axe de la face latérale (12, 35) de ladite pièce.

11. Procédé selon l'une des revendications 1 à 9, dans lequel la pièce d'acier à usiner est un cylindre plein (18), de façon à obtenir directement, après usinage par électro-érosion, un cylindre d'impression en taille-douce (24).

12. Machine d'usinage par électro-érosion pour la mise en oeuvre du procédé d'usinage par électro-érosion de la pièce d'acier (14, 16, 18) selon l'étape b) de la revendication 1 ou selon l'une des revendications 6 à 10, comportant un banc automatisé d'usinage par électro-érosion (25), avec un support d'électrode (31) monté fixe dans un bac (30) contenant un liquide diélectrique, ledit bac étant mobile dans un plan horizontal, et avec un dispositif rotatif (27) supportant la pièce d'acier à usiner, et un dispositif mobile (29, 31) supportant l'électrode (32), caractérisée par le fait que le dispositif rotatif (27) et le dispositif mobile (29, 31) autorisent des déplacements relatifs entre pièce à usiner et électrode tels que l'axe de la face latérale (35) de ladite pièce reste parallèle au plan de référence (P') de ladite électrode, que le dispositif rotatif (27) est réglable suivant un axe vertical (z'-z) et en rotation (angle θ) autour de cet axe au moyen de deux moteurs pas à pas programmables, et que le dispositif mobile comporte un plateau (29) mobile dans un plan horizontal selon deux axes de référence (x'-x, y'-y) au moyen de deux moteurs pas à pas programmables, et un support d'électrode (31) monté sur ledit plateau de telle façon que le plan de référence (P') de l'électrode soit perpendiculaire au plan défini par les axes de référence et parallèle à l'un (y'-y) desdits axes.

**Patentansprüche**

1. Verfahren zur Serienherstellung von Tiefdruckelementen aus Stahl, bei dem aus einer gravierten Künstlerplatte (2) aus Kupfer, die das gewünschte Druckbild enthält, durch Galvanoformung eine Gegenform aus Kupfer (6, 32) hergestellt wird, **dadurch gekennzeichnet**, daß es die folgenden aufeinanderfolgenden Schritte umfaßt:

    a) man bearbeitet die Seite (8) der Gegenform aus Kupfer (6), die der Gravur gegenübersteht, derart, daß eine Bezugsebene (P') gebildet wird;

    b) man verwendet die Gegenform aus Kupfer (6, 32) als Elektrode in einer Funkenerosionsbank, in der das zu bearbeitende Stahlwerkstück (14, 16, 18) angeordnet ist, das eine zylindrische Seitenfläche (12, 35) aufweist, deren Achse parallel zur Bezugsebene (P') ist, wobei sich die Bearbeitung schrittweise in aufeinanderfolgenden Zonen aufgrund von Relativverstellungen zwischen dem zu bearbeitenden Werkstück (35) und der Elektrode (32) vollzieht, im Verlauf derer die Achse parallel zur Bezugsebene (P') verbleibt, bis man das oder die Tiefdruckelemente (20, 22, 24) erhält, die den gewünschten Oberflächenzustand aufweisen.

2. Verfahren nach Anspruch 1, **dadurch gekennzeichnet**, daß die Künstlerplatte (2) zuvor ihre Rückseite (P) planiert und bearbeitet wird, damit die Bezugsebene (P') parallel zu der genannten Rückseite (P) und daher zur Arbeitsfläche ist, auf der der Künstler gearbeitet hat.

3. Verfahren nach einem der Ansprüche 1 und 2, **dadurch gekennzeichnet**, daß die verwendete Künstlerplatte (2) eine Gravur (4) aufweist, die geringfügig breiter als der gewünschte Abdruck ist, um die Elektrodenausbürstung (6) bei der Bearbeitung jeder aufeinanderfolgenden Zone des zu bearbeitenden Stahlwerkstücks zu beseitigen.

4. Verfahren nach Anspruch 3, dadurch gekennzeichnet, daß die Gravur (4) der Künstlerplatte (2) bis zur Erzielung von Vertiefungen von mehr als einigen 1/10 mm Tiefe, vorzugsweise 1/10 bis 2/10 mm, ausgeführt wird.

5. Verfahren nach einem der Ansprüche 1 bis 4, **dadurch gekennzeichnet**, daß die zylindrische Seitenfläche (12, 35) des zu bearbeitenden Stahlwerkstücks zuvor gerichtet und poliert wird.

6. Verfahren nach einem der Ansprüche 1 bis 5, **dadurch gekennzeichnet**, daß bei der Funkenerosionsbearbeitung man einen vorbestimmten Abstand (A1-B1) zwischen der Elektrode (6, 32) und der zylindrischen Seitenfläche (12, 35) des zu bearbeitenden Stahlwerkstücks einhält, wobei dieser Abstand bis auf einen Abstand in der Größenordnung von 1/10 mm bis 2/10 mm vermindert wird.

7. Verfahren nach einem der Ansprüche 1 bis 6, **dadurch gekennzeichnet**, daß das zu bearbeitende Stahlwerkstück um Winkelschritte (θ) für die Bearbeitung jeder aufeinanderfolgenden Zone des Werkstücks drehen kann, wobei die Elektrode (32) entsprechend parallel zur Bezugsebene (P') und senkrecht zur Achse des zu bearbeitenden Werkstücks um eine Schrittweite verstellt wird, die gleich der Bogenlänge der Seitenfläche (35) des zu bearbeiteten Werkstücks entsprechend dem Winkelschritt ist.

8. Verfahren nach Anspruch 7, **dadurch gekennzeichnet,** daß der Verstellschritt der Elektrode (32) in der Größenordnung von einigen 1/10 mm, vorzugsweise ungefähr 5/10 mm, liegt.

9. Verfahren nach Anspruch 7, **dadurch gekennzeichnet,** daß bei der Bearbeitung jeder aufeinanderfolgenden Zone des zu bearbeitenden Stahlwerkstücks die Elektrode (32) lediglich in einer Richtung senkrecht zur Bezugsebene (P′) verstellt wird.

10. Verfahren nach einem der Ansprüche 1 bis 9, bei dem das zu bearbeitende Stahlwerkstück eine Platte (14) oder ein zylindrischer Mantel (16) ist, wobei das zu bearbeitende Werkstück für die Funkenerosionsbearbeitung auf einen zylindrischen Halter montiert wird, dessen Achse die Achse der Seitenfläche (12, 35) des Werkstücks bildet.

11. Verfahren nach einem der Ansprüche 1 bis 9, bei dem das zu bearbeitende Stahlwerkstück ein voller Zylinder (18) ist, um direkt nach der Funkenerosionsbearbeitung einen Tiefdruckzylinder (24) zu erhalten.

12. Funkenerosionsmaschine zur Ausführung einer Funkenerosionsbearbeitung des Stahlwerkstücks (14, 16, 18) gemäß Schritt b) von Anspruch 1 oder nach einem der Ansprüche 6 bis 10, enthaltend eine automatische Funkenerosionsbearbeitungsbank (25) mit einem Elektrodenträger (31) , der fest in einem Behälter (30) montiert ist, der eine dielektrische Flüssigkeit enthält, wobei der Behälter in einer horizontalen Ebene beweglich ist, und mit einer drehbaren Vorrichtung (27), die das zu bearbeitende Stahlwerkstück trägt, und mit einer beweglichen Vorrichtung (29, 31), die die Elektrode (32) trägt, **dadurch gekennzeichnet,** daß die drehbare Vorrichtung (27) und die bewegliche Vorrichtung (29, 31) Relativverstellungen zwischen dem zu bearbeitenden Werkstück und der Elektrode erlauben, derart, daß die Achse der Seitenfläche (35) des genannten Werkstücks parallel zur Bezugsebene (P′) der Elektrode verbleibt, die drehbare Vorrichtung (27) in einer vertikalen Achse (z′-z) und drehbar (Winkel θ) um diese Achse mittels zweier programmierbarer Schrittmotoren verstellbar ist, und daß die bewegliche Vorrichtung eine Platte (29) aufweist, die in einer horizontalen Ebene in zwei Bezugsachsen (x′-x, y′-y) mittels zweier programmierbarer Schrittmotoren beweglich ist, und mit einem Elektrodenträger (31), der auf dieser Platte derart befestigt ist, daß die Bezugsebene (P′) der Elektrode senkrecht zu der Ebene ist, die von den Bezugsachsen definiert ist, und parallel zu einer (y′-y) der genannten Achsen ist.

## Claims

1. A method of duplicating steel intaglio print elements, wherein by starting from an engraved copper artmodel (2) representing the desired print, a copper counterpart (6, 32) is formed by electroforming, characterized in that said method comprises the following steps in succession :

    a) the face (8) of the copper counterpart (6) opposite to its engraved face is machined so as to define a referece plane (P′), and

    b) the copper counterpart (6, 32) is used as an electrode in an electro-erosion machining bench in which the steel workpiece to be machined (14, 16, 18) is disposed and presents a cylindrical side face (12, 35) whose axis is parallel to the reference plane (P′), with machining taking place step by step over successive zones by virtue of relative displacements between said workpiece (35) and said electrode (32) during which said axis remains parallel to said reference plane (P′), until intaglio print elements (20, 22, 24) having the desired surface state are obtained.

2. A method according to claim 1, characterized in that the artmodel (2) is initially flattened and machined on its rear face (P) so that the reference plane (P′) is parallel to said face (P) and therefore to the working face on which the artist worked.

3. A method according to claim 1 or 2, charaterized in that the artmodel used (2) is engraved (4) slightly deeper than required for obtaining the desired print, thereby avoiding the need to brush the electrode (6) on machining each successive zone of the steel workpiece.

4. A method according to claim 3, charaterized in that the engraving (4) on the artmodel (2) is exagerated so as to obtain depressions whose depth is increased by several tenths of a millimeter, and preferably by one to two tenths of a millimeter.

5. A method according to anyone of claims 1 to 4, charaterized in that the cylindrical side face (12, 35) of the steel workpiece is previously rectified and polished.

6. A method according to anyone of claims 1 to 5, characterized in that during the electro-erosion machining step, a predetermined gap (A1 - B1) is maintained between the electrode (6, 32) and the cylindrical side face (12, 35) of the steel workpiece, said gap being reduced up to a gap of about one to two tenths of a millimeter across.

7. A method according to anyone of claims 1 to 6, characterized in that the steel workpiece is capable of rotating through an angular step (θ) for the machining of each successive zone of said piece, with the electrode (32) being correspondingly displaced parallel to the reference plane (P′) and perpendicularly to the axis of the workpiece through a step size equal to the arc length on the side face (35) of said workpiece corresponding to said angular step.

8. A method according to claim 7, characterized in that the displacement step side of the electrode (32) is of the order of a few tenths of a millimeter, and preferably about five tenths of a millimeter.

9. A method according to claim 7, characterized in that during the machining of each successive zone of the steel workpiece, only the electrode (32) is displaced, along a direction perpendicular to the reference plane (P').

10. A method according to anyone of claims 1 to 9, characterized in that the steel workpiece is a plate (14) or a cylindrical sleeve (16) with the workpiece being mounted for the electrode-erosion machining step on a cylindrical support whose axis constitutes the axis of the side face (12, 35) of said workpiece.

11. A method according to anyone of claims 1 to 9, in that the steel workpiece is a solid cylinder (18), thereby enabling an intaglio print cylinder (24) to be directly obtained after electro-erosion machining.

12. E lectro-erosion machining apparatus implementing the method of electro-erosion machining a steel workpiece (14, 16, 18) according to step (b) of claim 1, or according to anyone of claims 6 to 10, comprising an automated electro-erosion machining bench (25) including an electrode support (31) fixed in a tank (30) containing a dielectric liquid, said tank being moveable in a horizontal plane, together with a rotary device (27) for supporting the steel workpiece to be machined and a moving device (29, 31) for supporting the electrode (32), characterized in that the rotary device (27) and the moving device (29, 31) enable relative displacements to take place between the workpiece and the electrode such that the axis of the side face (35) of said workpiece remain parallel to the reference plane (P') of said electrode, in that the rotary device (27) is adjustable along a vertical axis (Z'- Z) and in rotation (θ angle) about said axis by means of two programmable stepper motors, and in that the moving device includes a bedplate (29) moveable in a horizontal plane along two reference axes (x'- x, y'- y) by means of two programmable stepper motors, together with an electrode support (31) mounted on the said bedplate in such a manner that the reference plane (P') of the electrode is perpendicular to the plane defined by the reference axes and is parallel to one (y' - y) of said - axes.

FIG_1

FIG_2

FIG_3a

FIG_3b

EP 0 322 301 B1